## Europäisches Patentamt
## European Patent Office
## Office européen des brevets

(11) Veröffentlichungsnummer: **0 299 134**
**B1**

(12)
# EUROPÄISCHE PATENTSCHRIFT

(45) Veröffentlichungstag der Patentschrift:
08.08.90

(51) Int. Cl.⁵: **B24C 3/32**, B05D 7/22, F16L 58/10

(21) Anmeldenummer: **88101662.0**

(22) Anmeldetag: **05.02.88**

(54) Verfahren zur Innenausbesserung von installierten Leitungen.

(30) Priorität: **09.07.87 CH 2604/87**
**02.02.88 CH 346/88**

(43) Veröffentlichungstag der Anmeldung:
**18.01.89 Patentblatt 89/3**

(45) Bekanntmachung des Hinweises auf die Patenterteilung:
**08.08.90 Patentblatt 90/32**

(84) Benannte Vertragsstaaten:
**AT BE CH DE ES FR GB GR IT LI LU NL SE**

(56) Entgegenhaltungen:
**DE-A- 1 471 510**
**DE-A- 3 235 506**
**DE-A- 3 429 881**
**FR-A- 2 526 124**
**GB-A- 2 140 337**
**US-A- 3 073 687**
**US-A- 3 139 704**
**US-A- 4 327 132**

**PATENT ABSTRACTS OF JAPAN, Band 6,**
**Nr. 191 (C-127)[1069], 30. September 1982; &**
**JP-A- 57 105 270 (KINZOU FUJII) 30-06-1982**
**PATENT ABSTRACTS OF JAPAN, Band 11,**
**Nr. 202 (C-432)[2649], 30. Juni 1987; &**
**JP-A- 62 23 484 (NIPPON GIJUTSU KAIHATSU CENTER K.K.) 31-01-1987**

(73) Patentinhaber: **Näf, Werner, Weingartenstrasse 2,**
**CH-8820 Wädenswil(CH)**

(72) Erfinder: **Näf, Werner, Weingartenstrasse 2,**
**CH-8820 Wädenswil(CH)**

(74) Vertreter: **Maspoli, René A., PATENTANWALTSBUREAU**
**R.A. MASPOLI Postfach 191, CH-8053 Zürich(CH)**

**Beschreibung**

Die vorliegend beschriebene Erfindung bezieht sich auf ein Verfahren zur Innenausbesserung von installierten Leitungen. Solche Leitungen sind z.B. Zu- und Ablaufleitungen für Wasser oder Gas in Wohn-, Industrie- und Kommunalanlagen bis zu einem $\varnothing_i$ von etwa 200 mm; darin eingeschlossen sind Haushalts- und Industrieabwasserleitungen.

Das Problem der Verkrustung solcher Leitungen ist seit langem bekannt. Derartige Verkrustungen beruhen vor allem auf Kalkablagerungen aus dem Wasser, auf Rostbildung in der Leitung, auf anderen Abscheidungen aus dem Wasser, auf Reaktionsprodukten zwischen im Wasser mitgeführten Substanzen und dem Leitungsmetall usw. Auch Kombinationen der genannten Effekte sind bekannt.

Speziell störend wirken sich solche Verkrustungen bei eingemauerten oder im Boden verlegten Leitungen aus; diese Art der Leitungsverlegung ist zudem heutzutage die gebräuchlichere.

Verlegte Nutzleitungen werden auch heute schon mittels Druckluft mit und ohne Sandzugabe gereinigt und auch Reaktivharze werden schon in derartig vorgereinigte Leitungen mittels Druckluft eingestäubt. Die Erfinder der hier beschriebenen Methode haben aber die Erfahrung gemacht, dass die meisten derartigen Reinigungen primär auf Einzelkenntnissen handwerklicher Art beruhen. Erst die Kombination der Verfahrensschritte gemäss der in den Patentansprüchen definierten, erfindungsgemässen Methode unter Verwendung des ebenfalls in den Patentansprüchen charakterisierten Haftharzes, erbringt das Reinigung- und Innenbeschichtungsverfahren von Nutzleitungen mit einem genügend gesicherten Effekt.

Bei einer relativ bekannten Reinigungsart auf primär handwerklicher Basis wird aus gegebenenfalls fahrbaren Kompressoranlagen über einen Verteiler Druckluft in die zu reinigende Leitung gegeben. In einer ersten Phase wird dabei nur mittels durch Kompression erwärmter Luft vorgetrocknet. Anschliessend wird, in einer zweiten Phase, Sand im Luftstrom zugegeben. Dabei ist es wesentlich, dass das Luft-Sand-Gemisch in spiralförmiger Bewegung durch die Leitung geführt wird; eine normalförmige Bewegung des Gemisches wird ausdrücklich als ineffektiv bezeichnet. In einer dritten Phase des bekannten Verfahrens wird dann, wiederum mittels eines spiralförmig bewegten Druckluftstromes, ein Reaktivharz in die Leitung eingespritzt und darin verteilt.

Die GB-A 2 140 337 lehrt und beansprucht ein gattungsgleiches Verfahren. Charakteristisch dafür ist, dass sowohl der Reinigungsstrom wie auch der Harzdurchsatzstrom pulsierend durch die auszubessernde Leitung fliessen. Zudem sind die Grössen und Mengen der dem Reinigungsstrom zugesetzten Abrasivteilchen nicht definiert, und die Zugabe von Haftstoffen mit ebenfalls definierten Korngrössen zum Ausbesserungsharz wird nicht erwähnt.

Speziell enthält die Lehre gemäss der GB-A 2 140 337 weder eine Andeutung auf die Verwendung von Abrasivstoffen mit Dichte > $3,0 \text{ g} \cdot \text{cm}^{-3}$ (die härter sind als die üblichen Ablagerungen in den auszubessernden Leitungen) gemeinsam mit den anorganischen Haftstoffen im Harz, noch die Eingabe des Harzes in Form eines Pfropfens, noch die Schaffung der Druckdifferenz mittels Druck und Unterdruck. Die Anmelderin ist aber der Überzeugung, dass die guten Resultate, die mit ihrem Verfahren erreicht werden, eben auf diese Kombination zurückzuführen sind.

Das erfindungegemässe Verfahren verzichtet zudem völlig auf die Pulsation sowohl des Reinigungswie auch des Harzstromes. Diese Pulsation ist aber gemäss der zitierten GB-A der relevante Aspekt der dortigen Methode. Dieses Verfahren ist dafür bestimmt materialschonender und energiesparender.

Die Veröffentlichung in PATENT ABSTRACTS OF JAPAN, Band 11, Nr. 202(C-432) [2649] vom 30. Juni 1987 lehrt zwar die pfropfenweise Zugabe von fluiden Innenbelagsmaterialien für Leitungsausbesserungen.

Diese Beschichtung erfolgt aber nicht im Zusammenhang mit einer anmeldungsgemässen Vorreinigung, und die gleichförmige Beschichtung wird dort angeblich mittels Temperierung des Belagsmaterials (und nicht mittels Zugabe von anorganischen Haftstoffen) erreicht. Eine solche Temperierung ist – gemäss der Überzeugung der Anmelderin – aber praktisch unmöglich, da eigentlich das ganze System inklusive Leitung auf die notwendige Temperatur gebracht werden müsste. Auch diese Veröffentlichung legt also das gesamte anmeldungsgemässe Verfahren nicht nahe.

Gegenüber der eben besprochenen Methode unterscheidet sich das erfindungsgemässe Verfahren zur Reinigung und Neubeschichtung der Innenwände von Nutzwasserleitungen einmal grundsätzlich dadurch, dass es als Gesamtverfahren optimiert ist und daher auch zu gesicherten Resultaten führt.

Das erfindungsgemässe Verfahren zur beschleunigten Reinigung und Neubeschichtung der Innenwand einer Wasserleitung ist durch die folgenden Verfahrensschritte gekennzeichnet:

– Trocknen des Leitungsinnenraumes mittels Durchströmenlassen von vorgetrockneter Druckluft,
– Entfernen von Innenbelägen mittels Durchströmenlassen eines Gemisches aus Druckluft und Abrasivmittel-Teilchen, die letzteren mit einem mittleren Aussendurchmesser von 0,8 bis 8 mm und einem spezifischen Gewicht von > $3,0 \text{ g} \cdot \text{cm}^{-3}$ in einem Anteil von > $1,0 \text{ g} \cdot \text{Nm}^{-3}$, wobei das Gemisch in der Leitung mit einer mittleren Geschwindigkeit, auf Normaldruck bezogen, von > $10 \text{ m s}^{-1}$ fliesst
– Ausblasen der Leitung mittels vorgetrockneter und vorgewärmter Luft, bis die Aussentemperatur der Leitung > 40°C ist,
– Innenbeschichten der Leitung mittels Ein- und Verblasen von Haftharz durch strömende Druckluft, wobei das Haftharz ein lösungsmittelfreies, selbstabbindendes Harz mit mindestens 5 Gew.-% anorganischen, oxidischen Haftstoffen mit einem mittleren Durchmesser von <0,08 mm ist und dessen Zugabe nach der Aufbereitung in Form von Pfropfen in die Leitung erfolgt,

wobei die für die Durchströmung der Leitung notwendige Druckdifferenz mindestens teilweise durch Absaugen der Luft am Ende der Leitung, d.h. durch Unterdruck, geschaffen wird.

Das erfindungsgemäss einzusetzende Haftharz ist ein lösungsmittelfreies 2-Komponentenharz und enthält mindestens 5 Gew.-% an feinverteilten anorganischen, oxidischen Haftstoffen und weist eine Viskosität bei 25°C von mindestens $2 \cdot 10^4$ m Pa $\cdot$ s auf.

Der genannte 2-Komponentenharz ist bevorzugterweise ein Epoxidharz mit Härter und enthält, als oxidische Haftstoffe, Teilchen aus primär $SiO_2$ mit einer unteren Korngrössenlimite von ca. 10 μm.

Im folgenden wird nun zum besseren Verständnis des Anmeldungsgegenstands beispielhaft die Reinigung einer Zufuhr-Wasserleitung in einem privaten Swimming-Pool rapportiert. Das dabei angewendete Verfahren entspricht hinsichtlich des verwendeten Abrasivmittels jedoch nicht dem erfindungsgemässen Verfahren.

Nach Verschliessen aller Abzweigungen wurden Ein- und Ausgang der Leitung am Vortag geöffnet.

Am Arbeitstag selbst wurde die Leitung vorerst mit Druckluft aus einem Bau-Kompressor vorgetrocknet. Die Druckluft wurde dabei vor dem Eintritt in die Leitung in einem Feuchtigkeitsabscheider vorgetrocknet.

Die notwendige Luftmenge ergab sich (wie auch anschliessend für die Reinigung und Beschichtung) aus der folgenden Tabelle:

| NW 15 mm/1/2" | Rohrlänge bis 100 m | 7,5 m³/min. |
| NW 20 mm/3/4" | Rohrlänge bis 100 m | 7,5 m³/min. |
| NW 25 mm/1" | Rohrlänge bis 100 m | 7,5 m³/min. |
| NW 32 mm/5/4" | Rohrlänge bis 100 m | 10,0 m³/min. |
| NW 40 mm/1 1/2" | Rohrlänge bis 100 m | 14,0 m³/min. |
| NW 50 mm/2" | Rohrlänge bis 100 m | 17,0 m³/min. |
| NW 65 mm/2 1/2" | Rohrlänge bis 100 m | 24,0 m³/min. |
| NW 80 mm/3" | Rohrlänge bis 100 m | 26,0 m³/min. |
| NW 100 mm/4" | Rohrlänge bis 100 m | 30,0 m³/min. |
| NW 125 mm/5" | Rohrlänge bis 100 m | 35,0 m³/min. |
| NW 150 mm/6" | Rohrlänge bis 100 m | 45,0 m³/min. |

Die abgegebenen Luftmengen können allerdings stark variieren, je nach Menge der Abzweigungen und dem Verkrustungsgrad der Leitung.

Im vorliegenden Fall betrug die Gesamtlänge der Leitung ca. 70 m; sie bestand hauptsächlich aus 1"- und 1 1/2"-Röhren. Die Leitung war zum Teil eingemauert und zum Teil im Freien unterbodenverlegt.

Die Vortrocknung dauerte ca. 30 Minuten. Beim Leitungsaustritt wurde ein spezieller Abscheider montiert; der austretende feine Feststoff (anscheinend vor allem Kalkabscheidungen und Rost) gelangte in einen speziellen Abscheider.

Anschliessend wurde zwischen Kompressor und Lufteintritt in die Leitung eine Zugabevorrichtung für das Abrasivmittel (trockener Normalsand von 2 bis 4 mm Korngrösse ) eingebaut. Beim Luftaustritt wurde ein Abscheider mit Zyklontrenner mit Manometer und Regulierventil installiert. Darauf wurde ca. 8 Minuten lang bei einem durchschnittlichen Überdruck von etwa 1 Atmosphäre mit höchster Kompressorleistung und Abrasivmittel-Zugabe gearbeitet. Nach dem Blasen waren etwa 200 kg Abrasivmittel durch die zu reinigende Leitung geblasen worden. Am Ende des Blasens zeigte die Luft beim Austritt aus dem Abscheider eine Temperatur von ~50°C.

Nach kurzzeitigem Ausblasen wurden chargenweise jeweils 4 kg Haftharz der folgenden Rezeptur zubereitet; das Harz wurde jeweils so zubereitet, dass es eine Viskosität von über $2 \cdot 10^4$ m Pa $\cdot$ s bei ca. 25°C zeigte. Als Pfropfen wurden die Chargen dann in den Lufteintrittstutzen (senkrecht) am Anfang der Leitung eingegossen. Dann wurde sofort die Druckluft angeschlossen und der Pfropfen solange verblasen, bis kein deutlicher Widerstand mehr spürbar war. Hierauf wurde ein weiterer Harzpfropfen eingeführt, usw., im ganzen viermal. Erst dann wurde ein Austritt von Harz aus dem Leitungsende festgestellt.

Basisrezeptur LSE-Beschichtung

| Epoxidharz: | Bis-A oder Bis-A/F Typ | 47 G% |
|---|---|---|
| Härter: | aliphatisches Polyaminaddukt | 19 G% |
| Titandioxid | | 4 G% |
| Eisenoxidrot | | 10 G% |
| Silikatfüllstoff | | 15 G% |
| Thixotropierung (Silikat) | | 5 G% |
| Total | | 100 G% |

Anschliessend wurde noch einmal 30 min lang durchgeblasen und die Leitung am Ende der Blaszeit oben und unten verschlossen.

2 Tage danach wurde die Leitung wieder an das Netz angeschlossen und vorerst gut durchgespült.

Eine Bassinfüllung dauerte nach der Reinigung der Leitung ca. 8 Stunden und ergab klares Wasser; vor der Reinigung dauerte eine Füllung über 14 Stunden, und das Wasser war zeitweise rostrot gefärbt.

**Patentansprüche**

1. Verfahren zur Innenausbesserung von installierten Leitungen, mit folgenden Verfahrensschritten:
– Trocknen des Leitungsinnenraumes mittels Durchströmenlassen von vorgetrockneter Druckluft,
– Entfernen von Innenbelägen mittels Durchströmenlassen eines Gemisches aus Druckluft und Abrasivmittel-Teilchen, die letzteren mit einem mittleren Aussendurchmesser von 0,8 bis 8 mm und einem spezifischen Gewicht von > 3,0 g · $cm^{-3}$ in einem Anteil von > 1,0 g · $Nm^{-3}$, wobei das Gemisch in der Leitung mit einer mittleren Geschwindigkeit, auf Normaldruck bezogen, von > 10 m $s^{-1}$ fliesst
– Ausblasen der Leitung mittels vorgetrockneter und vorgewärmter Luft, bis die Aussentemperatur der Leitung > 40°C ist,
– Innenbeschichten der Leitung mittels Ein- und Verblasen von Haftharz durch strömende Druckluft, wobei das Haftharz ein lösungsmittelfreies, selbstabbindendes Harz mit mindestens 5 Gew.-% anorganischen, oxidischen Haftstoffen mit einem mittleren Durchmesser von < 0,08 mm ist und dessen Zugabe nach der Aufbereitung in Form von Pfropfen in die Leitung erfolgt, wobei die für die Durchströmung der Leitung notwendige Druckdifferenz mindestens teilweise durch Absaugen der Luft am Ende der Leitung, d.h. durch Unterdruck, geschaffen wird.

2. Verfahren gemäss Patentanspruch 1, bei welchem die Abrasivmittel-Teilchen einen mittleren Durchmesser von 2 bis 4 mm haben.

3. Verfahren gemäss Patentanspruch 1, bei welchem die mittlere, auf Normaldruck bezogene, Luftgeschwindigkeit > 50m/s beträgt.

4. Verfahren gemäss Patentanspruch 1, bei dem das Haftharz ein 2-Komponentenharz ist, speziell ein Epoxidharz mit Härter, dessen Viskosität bei 25°C mehr als 2 · $10^4$ m Pa · s beträgt.

**Claims**

1. Method for the internal reconditioning of installed conduits, with the following method steps:
– drying of the internal space of the conduit by means of permitting the throughflow of pre-dried compressed air,
removal of internal deposits by means of permitting the throughflow of a mixture of compressed air and particles of abrasive agent, the latter with a mean external diameter of 0.8 to 8 mm. and a specific weight of > 3.0 g./$cm.^{-3}$ in a proportion of > 1.0 g./$Nm^{-3}$, while the mixture is flowing in the conduit with a mean speed, related to normal pressure, of > 10 m./$s^{-1}$,
blowing out of the conduit by means of pre-dried and preheated air, until the external temperature of the conduit is > 40°C.,
internal coating of the conduit by means of the blowing-in and blasting of adhesive resin by flowing compressed air, the adhesive resin being a solvent-free self-setting resin with at least 5% wt. of inorganic, oxidic adhesive substances with a mean diameter of < 0.08 mm. and its addition into the conduit takes place after preparation in the form of plugs,
where the pressure difference necessary for the flow through the conduit is produced at least partially by sucking away of the air at the end of the conduit, that is by negative pressure.

2. Method according to Patent claim 1, in which the abrasive medium particles have a mean diameter of 2 to 4 mm.

3. Method according to Patent claim 1, in which the mean air speed, related to normal pressure, amounts to >50 m./s.

4. Method according to Patent claim 1, in which the adhesive resin is a 2-component resin, especially an epoxy resin with hardener, the viscosity of which at 25°C amounts to more than 2 · $10^4$ m Pa / s.

**Revendications**

1. Procédé pour réparer intérieurement des canalisations installées, comprenant les étapes suivantes:
- Séchage de l'intérieur de la canalisation en le faisant traverser par de l'air sous pression séché au préalable,
- Enlèvement des dépôts intérieurs en le faisant traverser par un mélange d'air sous pression et de particules d'abrasif, ces dernières présentant un diamètre extérieur moyen de 0,8 à 8 mm et un poids spécifique supérieur à 3,0 g · cm⁻³, dans une proportion supérieure à 1,0 g · Nm⁻³, le mélange s'écoulant dans la canalisation à une vitesse moyenne, rapportée à la pression normale, qui est supérieure à 10 m · s⁻¹,
- Purge de la canalisation au moyen d'air séché et chauffé au préalable jusqu'à ce que la température extérieure de la canalisation soit supérieure à 40°C,
- Revêtement de l'intérieur de la canalisation par injection et soufflage de résine adhésive au moyen d'air sous pression en écoulement, la résine adhésive étant une résine sans solvant et autodurcissable comprenant au moins 5% en poids de matières adhésives inorganiques oxydées d'un diamètre moyen inférieur à 0,08 mm, et son addition ayant lieu dans la canalisation après sa préparation sous la forme de tampons,
la différence de pression qui est nécessaire à l'écoulement à travers la conduite étant créée, au moins partiellement, par une aspiration de l'air à une extrémité de la canalisation, c'est-à-dire par une dépression.

2. Procédé selon la revendication 1, dans lequel les particules d'abrasif présentent un diamètre moyen de 2 à 4 mm.

3. Procédé selon la revendication 1, dans lequel la vitesse moyenne de l'air, rapportée à la pression normale, est supérieure à 50 m/s.

4. Procédé selon la revendication 1, dans lequel la résine adhésive est une résine à deux composants, en particulier une résine époxyde à durcisseur, dont la viscosité à 25°C est supérieure à 2.10⁴ mPa · s.